# EUROPEAN PATENT APPLICATION

(11) **EP 1 970 751 A1**
(43) Date of publication of application: **17.09.2008**
(21) Application number: 08004986.9
(22) Date of filing: 17.03.2008
(51) Int. Cl.: G02F 1/1335, G02F 1/13357, G02B 5/04, G02B 6/00

(54) **Optical sheet and liquid crystal display device having the same**

(30) Priority: 15.03.2007 KR 20070025433; 15.03.2007 KR 20070025439; 23.11.2007 KR 20070120393
(71) Applicant: LG Electronics Inc., Seoul 150-010 (KR)
(72) Inventor: Joo, Hanbitt, Gyoungsangbuk-do 730-727 (KR); Lee, Junghoon, Gyoungsangbuk-do 730-727 (KR); Lee, Seoungho, Gyoungsangbuk-do 730-727 (KR)
(74) Representative: Katérle, Axel

(57) **Abstract**

Disclosed is an optical sheet and an LCD device comprising the optical sheet. The optical sheet comprises a base film (262b); and a prism part (263b) disposed on one surface of the base film, and comprising a plurality of peaks and a plurality of valleys; wherein the prism part comprises a plurality of diffusion particles (268b), and the prism part is arranged along a longitudinal direction and a height of each peak varies as the peak goes along the longitudinal direction.

## Description

This application claims the benefit of Korean Patent Application No. 10-2007-0025433 filed on March 15, 2007, 10-2007-0025439 filed on March 15, 2007, 10-2007-0120393 filed on November 23, 2007, which is hereby incorporated by reference.

### BACKGROUND OF THE DISCLOSURE

### Field of the disclosure

This document relates to an optical sheet and a liquid crystal display device having the same.

### Description of the Background Art

A liquid crystal display (LCD) device is a thin, flat display device capable of representing images by changing the transmittance of liquid crystal molecules.

A general LCD device, which is classified as a passive display, comprises an LCD panel for displaying images and a backlight unit placed under the LCD panel to supply light to the LCD panel.

A backlight unit may comprise a light source generating light and an optical sheet. The optical sheet may comprise a diffusion sheet, a prism sheet, and a protection sheet.

Light emitted from the light source is diffused by the diffusion sheet and then collected toward the LCD panel by the prism sheet.

However, these conventional LCD devices have a limitation as to size and/or weight since the diffusion sheet and the prism sheet needs to be separately prepared.

### SUMMARY OF THE DISCLOSURE

An aspect of this document is to provide an optical sheet capable of improving the optical properties without separate diffusion sheet and prism sheet, and a liquid crystal display device having the same.

In one aspect, an optical sheet is provided, comprising: a base film; and a prism part disposed on one surface of the base film, and comprising a plurality of peaks and a plurality of valleys; wherein the prism part comprises a plurality of diffusion particles, and the prism part is arranged along a longitudinal direction and a height of each peak varies as the peak goes along the longitudinal direction.

In another aspect, an optical sheet is provided, comprising: a base film; and a prism part disposed on one surface of the base film, and comprising plurality of peaks and a plurality of valleys, wherein the prism part comprises a plurality of diffusion particles, and the prism part is arranged along a longitudinal direction and the peaks and valleys are arranged in a zigzag manner.

In still another aspect, an optical sheet is provided, comprising: a base film; and a prism part disposed on one surface of the base film, and comprising a first resin and a plurality of diffusion particles, a difference between a refractive index of the diffusion particles and a refractive index of the first resin lies substantially in a range between 0.01 and 0.5.

In still another aspect, a liquid crystal display device is provided, comprising: a light source; an optical sheet disposed on the light source; and a liquid crystal display panel disposed on the optical sheet, wherein the optical sheet comprises, a base film; and a prism part disposed on one surface of the base film, and comprising a resin and a plurality of diffusion particles, a difference between a refractive index of the diffusion particles and a refractive index of the first resin lies substantially in a range between 0.01 and 0.5.

### BRIEF DESCRIPTION OF THE DRAWINGS

The accompanying drawings, which are comprised to provide a further understanding of the invention and are incorporated on and constitute a part of this specification illustrate embodiments of the invention and together with the description serve to explain the principles of the invention.

FIG. 1 is a cross sectional view illustrating an LCD device according to an exemplary embodiment of this document.

FIG. 2 is a cross sectional view illustrating an LCD panel of the LCD device shown in FIG. 1.

FIG. 3 is a cross sectional view illustrating an LCD device according to another exemplary embodiment this document.

FIG. 4 is a perspective view illustrating an optical sheet according to a first exemplary embodiment of this document.

FIG. 5 is a side view of the optical sheet shown in FIG. 4.

FIG. 6 is a perspective view illustrating an optical sheet according to a second exemplary embodiment of this document, and FIG. 7 is a perspective view illustrating an optical sheet according to a third exemplary embodiment of this document.

FIG. 8 is a side view of the optical sheet shown in FIG. 6.

FIG. 9 is a perspective view illustrating an optical sheet according to a fourth exemplary embodiment of this document.

FIG. 10 is a side view of the optical sheet shown in FIG. 9.

FIG. 11 is a perspective view illustrating an optical sheet according to a fifth exemplary embodiment of this document, and FIG. 12 is a perspective view illustrating an optical sheet according to a sixth exemplary embodiment of this document.

FIG. 13 is a side view of the optical sheet shown in FIG. 11.

FIG. 14 is a perspective view illustrating an optical sheet according to a seventh exemplary embodiment of this document.

FIG. 15 is a side view of the optical sheet shown in FIG. 14.

FIG. 16 is a perspective view illustrating an optical sheet according to an eighth exemplary embodiment of this document, and FIG. 17 is a perspective view illustrating an optical sheet according to a ninth exemplary embodiment of this document.

FIG. 18 is a side view of the optical sheet shown in FIG. 16.

FIG. 19 is a perspective view illustrating an optical sheet according to a tenth exemplary embodiment of this document.

FIG. 20 is a side view of the optical sheet shown in FIG. 19.

FIG. 21 is a perspective view illustrating an optical sheet according to an eleventh exemplary embodiment of this document, and FIG. 22 is a perspective view illustrating an optical sheet according to a twelfth exemplary embodiment of this document.

FIG. 23 is a side view of the optical sheet shown in FIG. 21.

FIG. 24 is a cross sectional view illustrating an optical sheet according to an exemplary embodiment of this document.

FIG. 25 is luminance curves of light output through the optical sheet formed according to this document and the conventional prism sheet.

FIG. 26 and FIG. 27 are a perspective view and a plan view illustrating an optical sheet according to another exemplary embodiment of this document, respectively.

FIG. 28 is a perspective view illustrating an optical sheet according to still another exemplary embodiment of this document.

FIG. 29 and FIG. 30 are a perspective view and a partial cross sectional view illustrating a backlight unit according to an exemplary embodiment of this document, respectively.

FIG. 31 and FIG. 32 are a perspective view and a partial cross sectional view illustrating a backlight unit according to another exemplary embodiment of this document, respectively.

FIG. 33 and FIG. 34 are a perspective view and a partial cross sectional view illustrating an LCD device according to an exemplary embodiment of this document, respectively.

### DETAILED DESCRIPTION OF EMBODIMENTS

Reference will now be made in detail embodiments of the invention examples of which are illustrated in the accompanying drawings.

An exemplary embodiment of this document provides an optical sheet comprising: a base film; and a prism part disposed on one surface of the base film, and comprising a plurality of peaks and a plurality of valleys; wherein the prism part comprises a plurality of diffusion particles, and the prism part is arranged along a longitudinal direction and a height of each peak varies as the peak goes along the longitudinal direction.

The optical sheet may further comprise a protecting layer disposed on the other surface of the base film, the protecting layer comprises a second resin and a plurality of beads.

A diameter of bead may be substantially 2 µm to 10 µm.

A height of each peak may vary randomly or periodically.

The prism part may comprise a first resin, and about 1 to 10 parts by weight of the diffusion particles based on 100 parts by weight of the first resin.

The prism part may comprise a first resin, a difference between a refractive index of the diffusion particles and a refractive index of the resin lies substantially in a range between 0.01 and 0.5.

The peaks and valleys may be arranged in a zigzag manner along a longitudinal direction on the prism part.

Another exemplary embodiment of this document provides an optical sheet comprising: a base film; and a prism part disposed on one surface of the base film, and comprising plurality of peaks and a plurality of valleys, wherein the prism part comprises a plurality of diffusion particles, and the prism part is arranged along a longitudinal direction and the peaks and valleys are arranged in a zigzag manner.

The optical sheet may further comprise a protecting layer disposed on the other surface of the base film, the protecting layer comprises a second resin and a plurality of beads.

A diameter of bead may be substantially 2 µm to 10 µm.

The peaks and the valleys may vary randomly or periodically in a zigzag manner.

The prism part may comprise a first resin, and about 1 to 10 parts by weight of the diffusion particles based on 100 parts by weight of the resin.

The prism part may comprise a first resin, a difference between a refractive index of the diffusion particles and a refractive index of the resin lies substantially in a range between 0.01 and 0.5.

Still another exemplary embodiment of this document provides an optical sheet comprising: a base film; and a prism part disposed on one surface of the base film, and comprising a first resin and a plurality of diffusion particles, a difference between a refractive index of the diffusion particles and a refractive index of the first resin lies substantially in a range between 0.01 and 0.5.

The diffusion particles may be beads.

The prism part may comprise a first resin, and about 1 to 10 parts by weight of the diffusion particles based on 100 parts by weight of the first resin.

The diffusion particles may be made of at least one selected from the group consisting of polymethylmethacrylate (PMMA), polystyrene, and silicon.

The prism part may comprise a plurality of peaks and a plurality of valleys, and a height of each peak varies randomly along a longitudinal direction on the prism part.

The optical sheet may further comprise a protecting layer disposed on the other surface of the base film, the protecting layer comprises a second resin and a plurality of beads.

The prism part may comprise a second resin, and about 1 to 50 parts by weight of the beads based on 100 parts by weight of the second resin.

Yet still another exemplary embodiment of this document provides a liquid crystal display device comprising: a light source; an optical sheet disposed on the light source; and a liquid crystal display panel disposed on the optical sheet, wherein the optical sheet comprises, a base film; and a prism part disposed on one surface of the base film, and comprising a resin and a plurality of diffusion particles, a difference between a refractive index of the diffusion particles and a refractive index of the first resin lies substantially in a range between 0.01 and 0.5.

Hereinafter, exemplary embodiments of this document will be described in more detail with reference to accompanying drawings.

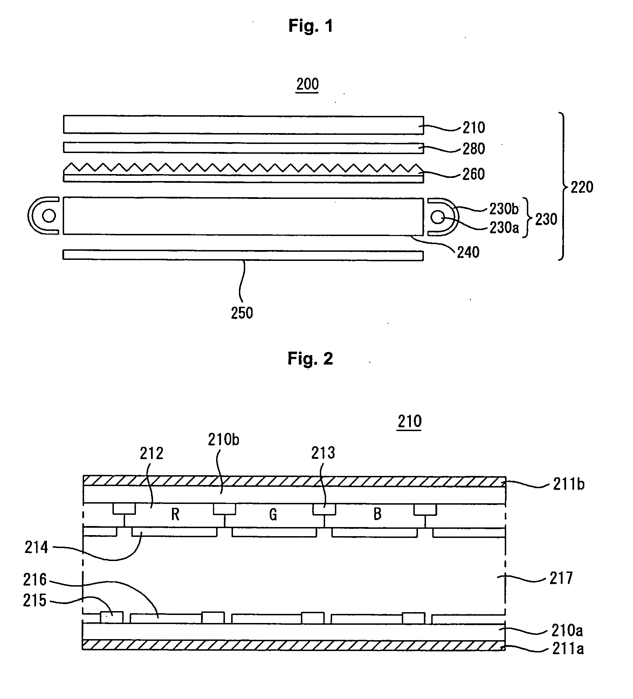

FIG 1 is a cross sectional view illustrating an LCD device 200 according to an exemplary embodiment of this document.

FIG 2 is a cross sectional view illustrating an LCD panel of the LCD device 200 shown in FIG. 1.

Referring to FIGS. 1 and 2, LCD device 200 comprises an LCD panel 210 and a backlight unit 220. LCD panel 210 displays images according to driving signals and data signals supplied from an external device. Backlight unit 220 is placed under LCD panel 210 to illuminate LCD panel 210.

LCD panel 210 comprises a lower substrate 210a, an upper substrate 210b, a lower polarizing film 211a, an upper polarizing film 211b, a color filter 212, a black matrix 213, a common electrode 214, a TFT array 215, a pixel electrode 216, and a liquid crystal layer 217.

Color filter 212 comprises a red color filter portion, a green color filter portion, and a blue color filter portion to display a red image, a green image, and a blue image, respectively.

TFT array 215 functions as a switching element to switch pixel electrode 216 on and off.

The liquid crystal molecules contained in liquid crystal layer 217 are arranged according to a voltage applied between common electrode 214 and pixel electrode 216.

The light generated from backlight unit 220 passes through liquid crystal layer 217 and illuminates color filter 212.

It should be understood that exact, structural features of LCD panel 210 are not important in understanding and embodying the present invention, and rather the spirit of the present invention may be applicable to any LCD panels commonly employed for LCD devices. Accordingly, the scope of the invention should not be construed to be limited to the above described structure of LCD panel 210.

Backlight unit 220 comprises a light source unit 230, a light guide plate 240, a reflection sheet 250, and an optical sheet 260. Backlight unit 220 may further comprise an optional protection sheet 280.

In this embodiment, an edge light type backlight unit will be described, in which light sources 230 are arranged near both ends of light guide plate 240. Of course, another edge light type backlight unit may be employed for the LCD device according to the present invention, in which light source unit 230 is arranged near only one end of light guide plate 240.

Light source unit 230 comprises a light source 230a and a reflecting plate 230b. Light source 230a emits prescribed spectrum light, e.g. white light. Reflecting plate 230b is arranged outside the light source 230a to reflect the light. Light source 230a may comprise, but not limited to, a cold cathode fluorescent lamp (CCFL), an electrode fluorescent lamp (EEFL), and a light emitting diode (LED).

Light generated from light source 230a is incident on a side of light guide plate 240 or on reflecting plate 230b, which in turn reflects the incident light back to the side.

Also, reflecting plate 230b reflects the light generated from light source 230a toward light guide plate 240 to increase the amount of light directed to light guide plate 240. This helps to improve light efficiency. Reflecting plate 230b is made of a high-reflective material, and has a silver-coated film on its surface.

Light source unit 230 may have a difficulty in uniformly disperse the light generated from light source unit 230 over the entire surface of backlight unit 220 since it is arranged near a side of backlight unit 220.

Light guide plate 240 permits the light to be uniformly dispersed over the entire surface of backlight unit 220.

More specifically, light guide plate 240 can direct a light incident from light source unit 230 across its incident surface toward LCD panel 210.

For this purpose, light guide plate 240 is designed so that a consecutive total reflection of the incident light may occur in light guide plate 240 at an angle smaller than the critical angle. The light propagates across the top surface of light guide plate 240, i.e. light emitting surface, toward LCD panel 210.

Light guide plate 240 may be made of acrylic resin, for example, polymethylmethacrylate (PMMA).

Reflection sheet 250 is arranged under light guide plate 240 to reflect the light directed toward reflection sheet 250 back toward light guide plate 240.

Reflection sheet 250 may be formed by coating a titanium layer on a silver-laminated sheet, made of any one of SUS, brass, aluminum, and PET, to prevent any possible deformation that could be caused from long term heat absorption.

Also, reflection sheet 250 may be made of a PET sheet whose surface has been embossed to disperse the incident light.

Backlight unit 220 may further comprise one or more optical members (not shown) that allows the light passing through light guide plate 240 to effectively reach the viewing surface of LCD panel 210 and uniformly disperse over the viewing surface of LCD panel 210.

Optical sheet 260 changes the non-perpendicular light into the perpendicular one with respect to the viewing surface of LCD panel 210, so that the light can be effectively collected toward LCD panel 210 and an effective, wide view angle can be achieved. More detailed descriptions of optical sheet 260 will be given later.

Protection sheet 280 is arranged over optical sheet 260 to prevent any damage to optical sheet 260. More specifically, protection sheet 280 may prevent any damage of optical sheet 260, such as scratches, caused by optical sheet 260 directly contacting LCD panel 210, and widen the view angle narrowed by optical sheet 260 within a prescribed range.

Protection sheet 280 may comprise a diffusing layer (not shown) with a lower haze and a high transmittance so as to gain an optimum diffusing effect regarding the light directed from optical sheet 260 toward LCD panel 210.

It should be understood that exact, structural features of protection sheet 280 are not important in understanding and embodying the present invention, and rather the spirit of the present invention may be applicable to any protection sheet 280 commonly employed for backlight units.

Backlight unit 220 may be configured without a separate protection sheet 280, since optical sheet 260 may provide a function of protection sheet 280, such as diffusing function.

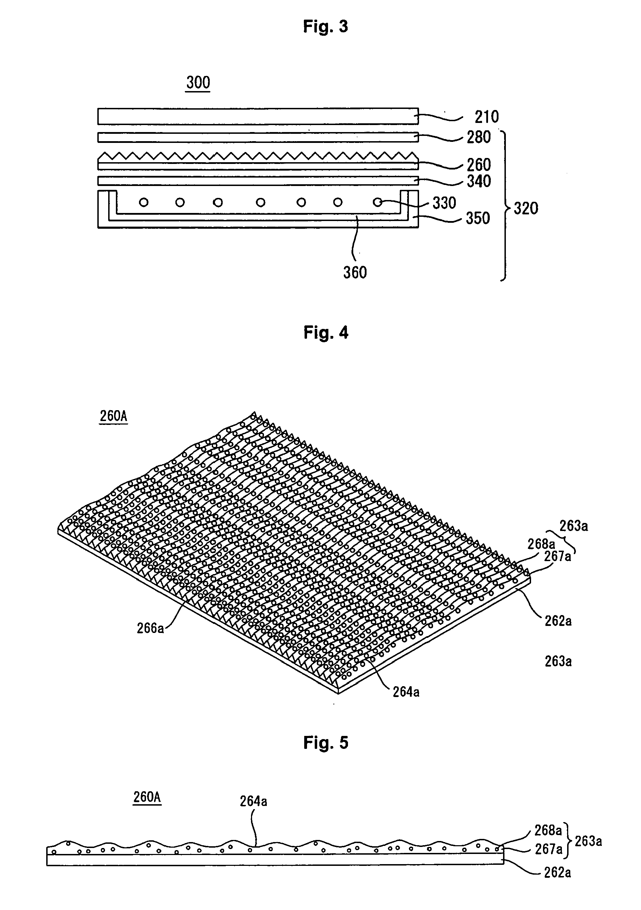

FIG 3 is a cross sectional view illustrating an LCD device 300 according to another exemplary embodiment of this document.

Referring to FIG 3, a direct light type backlight unit 320 is employed for LCD device 300.

Hereinafter, the descriptions of LCD device 300 will focus on the difference between edge-light type backlight unit 220 and direct-light type backlight unit 320. The components equal or similar to those of the above exemplary embodiment will have the same reference numerals and the detailed descriptions will be omitted.

A light source 330 emits a prescribed spectrum light to illuminate LCD panel 210. Light source 330a may comprise, but not limited to, a cold cathode fluorescent lamp (CCFL), an electrode flourescent lamp (EEFL), and a light emitting diode (LED).

An optical plate 340 has a constant pattern in its inside to eliminate the radiation of the light emitted from light source 330. Optical plate 340 may be formed, for example of polymethylmethacrylate(PMMA).

A frame 350 provides a space to accommodate light source 330. A reflection sheet 360 may be optionally provided on frame 350.

Reflection sheet 360 reflects the light directed toward reflection sheet 360 back toward LCD panel 210 to improve the light efficiency of LCD panel 210.

Reflection sheet 360 may be formed by coating a titanium layer on a silver-laminated sheet, made of any one of SUS, brass, aluminum, and PET, to prevent any possible deformation that could be caused from long term heat absorption.

Also, reflection sheet 360 may be made of a PET sheet whose surface has been embossed to disperse the incident light .

As described above, the technical spirit of the present invention may be applicable to the direct-light type backlight unit 320, as well as the edge-light type backlight unit 220.

It should be understood that the configurations of the LCD devices are not limited to those shown in accompanying drawings, and the optical sheets of the present invention may be applicable to any configurations commonly employed for LCD devices.

FIG 4 is a perspective view illustrating an optical sheet 260A according to a first exemplary embodiment of this document, and FIG 5 is a side view of the optical sheet 260A shown in FIG 4.

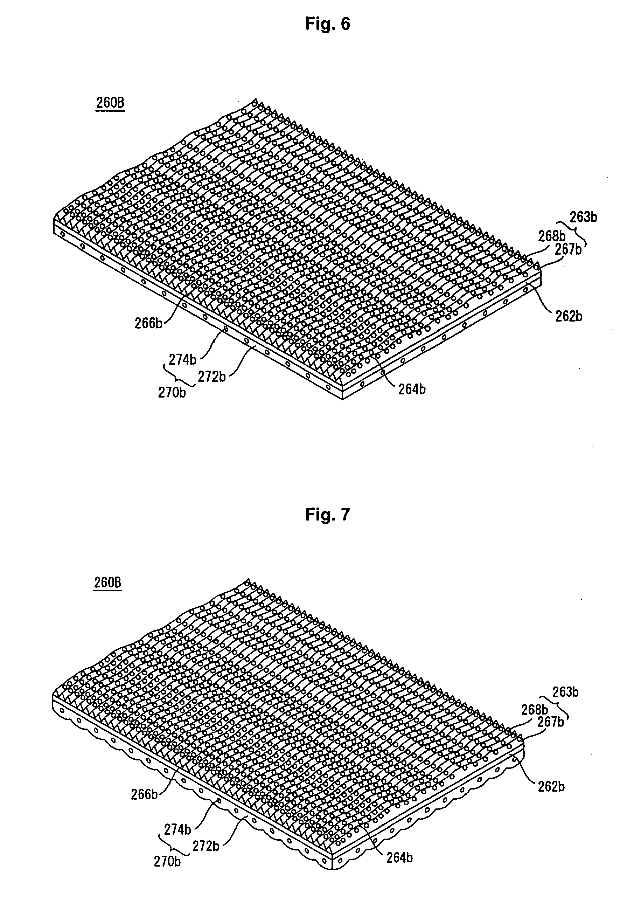

FIG 6 is a perspective view illustrating an optical sheet 260B according to a second exemplary embodiment of this document, and FIG. 7 is a perspective view illustrating an optical sheet 260B according to a third exemplary embodiment of this document.

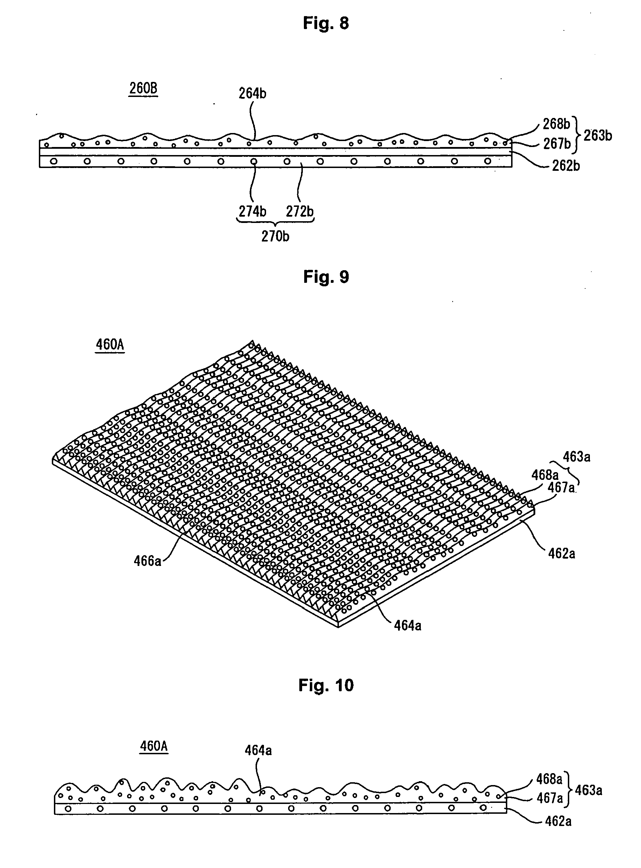

FIG. 8 is a side view of the optical sheet 260B shown in FIG. 6.

Referring to FIG. 4, optical sheet 260A comprises a base film 262a and a prism part 263a. Referring to FIGS. 6 and 7, optical sheet 260B comprises a base film 262b, and a prism part 263b. Optical sheet 260B differs from optical sheet 260A in that optical sheet 260B further comprises a protecting layer 270b.

Prism part 263a comprises a plurality of peaks 264a and a plurality of valleys 266a. Prism part 263b comprises a plurality of peaks 264b and a plurality of valleys 266b. Peaks 264a and 264b may be different in height according to the location.

As shown in FIGS. 5 and 8, peaks 264a and 264b may be continuously formed on base films 262a and 262b along a direction, respectively, each having a periodically changing height.

Methods of manufacturing optical sheets 260A and 260B are not particularly limited. For example, optical sheets 260A and 260B may be manufactured so that the height of peaks 264a and 264b may be changed consecutively by performing a surface treatment on optical sheets 260A and 260B while vibrating a mold (not shown) periodically, which forms optical sheets 260A and 260B.

Although FIGS. 5 and 8 illustrate a case where the maximum height of peaks 264a and 264b varies periodically, the present invention is not limited thereto. For example, optical sheets 260A and 260B may be configured so that the height of peaks 264a and 264b varies periodically, with the maximum height maintained constantly.

Making peaks 264a and 264b different in height may decrease the likelihood of optical sheets 260A and 260B contacting the other components, and reduce the occurrence of moiré patterns.

Base films 262a and 262b may be formed of a material that has good characteristics with regard to light transmittance, mechanical properties, especially antishock performance, thermal resistance, and other electric properties. Such a material may comprise thermoplastics, such as polymethylmethacrylate (PMMA), polyethylen terephthalate (PET), and polycarbonate (PC).

Prism part 263a comprises a first resin 267a and a diffusion particle 268a, and prism part 263b comprises a first resin 267b and a diffusion particle 268b.

First resin 267a and 267b may be formed of a resin-based material, such as acrylic resin. The acrylic resin may comprise polyacrylate and PMMA.

Diffusion particles 268a and 268b are distributed in resin 267a and 267b to disperse the light incident across base films 262 and 262b, resepectively.

Diffusion particles 268a and 268b may be formed of transparent resin or slightly opaque material. Diffusion particles 268a and 268b may comprise beads.

The size of each diffusion particle 268a and 268b may be constant or vary with the conditions of using optical sheets 260A and 260B.

The prism part may comprise the first resin and 1 to 10 parts by weight of diffusion particles 268a and 268b based on 100 parts by weight of the first resin

The difference in refractive index between first resin 267a and diffusion particle 268a and between first resin 267b and diffusion particle 268b may range from about 0.01 to about 0.5.

Protecting layer 270b may improve the heat resistance properties of optical sheet 260b and uniformly diffuse the light incident from light guide plate 240 or optical plate 340 arranged there under.

Protecting layer 270b comprises a second resin 272b and a plurality of beads 274b distributed in second resin 272b.

Second resin 272b may be formed of transparent acrylic resin with a good thermal-resistance and mechanical characteristic. The acrylic resin may comprise polyacrylate and PMMA.

The protecting layer may comprise a second resin 272b and about 10 to 50 parts by weight of beads 274b based on 100 parts by weight of the second resin 272b.

The diameter of bead 274b may be properly chosen depending on the thickness of optical sheet 260b, for example within about 2 µm to about 10 µm.

In this exemplary embodiment, the diameter of beads 274 may be substantially constant. And, beads 274 may be uniformly distributed in second resin 272b. This helps to not only reduce the likelihood of a haze effect but also increase the brightness.

Of course, each bead 274b may have a different diameter from the others, and beads 274b may be randomly distributed in second resin 272b. This results in the increase of haze effect, which in turn may further improve the effect of preventing the occurrence of scratches that could be caused by physical contacts.

In addition, protecting layer 270b may prevent the deformation of optical sheet 260B rising from the heat generated from light source 230a and 330. That is, high thermal-resistance second resin 272b may prevent optical sheet 260b from wrinkling and permit the optical sheet 260B deformed under high temperature to return to its original appearance under the room temperature.

Moreover, protecting layer 270b may prevent optical sheet 260B from being damaged by external impacts or physical forces.

FIG 9 is a perspective view illustrating an optical sheet 460A according to a fourth exemplary embodiment of this document.

FIG 10 is a side view of the optical sheet 460A shown in FIG. 9.

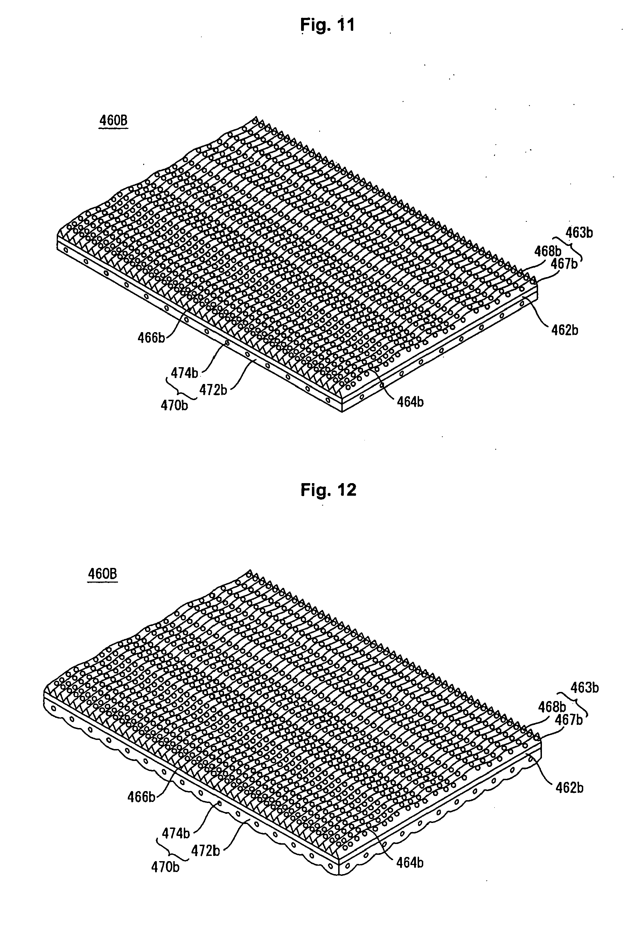

FIG 11 is a perspective view illustrating an optical sheet 460B according to a fifth exemplary embodiment of this document, and FIG 12 is a perspective view illustrating an optical sheet 460B according to a sixth exemplary embodiment of this document.

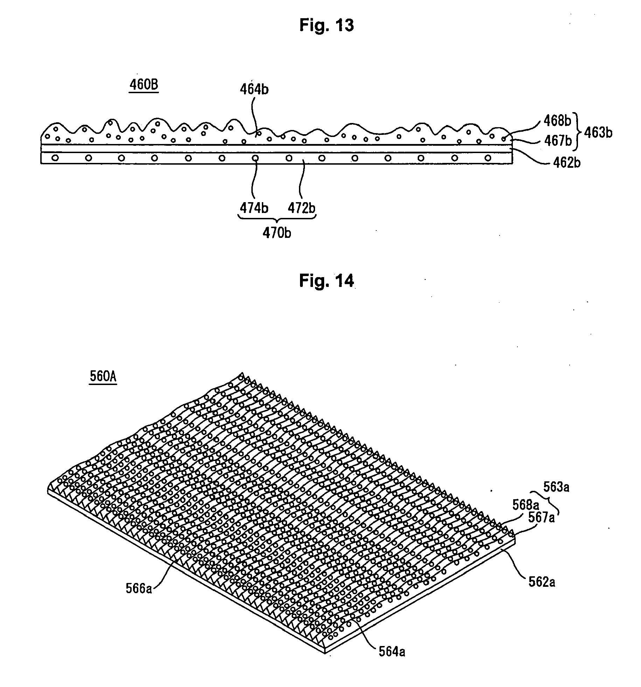

FIG 13 is a side view of the optical sheet 460B shown in FIG 11.

Referring to FIG. 9, optical sheet 460A comprises a base film 462a and a prism part 463a. Referring to FIGS. 11 and 12, optical sheet 460B comprises a base film 462b and a prism part 463b.

Optical sheet 460B differs from optical sheet 460A in that optical sheet 460B further comprises a protecting layer 470b.

Prism part 463a comprises a plurality of peaks 464a and a plurality of valleys 466a. Prism part 463b comprises a plurality of peaks 464b and a plurality of valleys 466b. Prism part 463a comprises a first resin 467a and a diffusion particle 468a, and prism part 463b comprises a first resin 467b and a diffusion particle 468b.

The prism part comprise the first resin and 1 to 10 parts by weight of diffusion particles 468a and 468b based on 100 parts by weight of the first resin.

Peaks 464a and 464b may be different in height according to the location. As shown in FIGS. 10 and 13, peaks 464a and 464b may be continuously formed on base films 462a and 462b along a direction, respectively, each having a randomly changing height.

Methods of manufacturing optical sheets 460A and 460B are not particularly limited. For example, optical sheets 460A and 460B may be manufactured so that the height of peaks 464a and 464b may be changed randomly by performing a surface treatment on optical sheets 460A and 460B while vibrating a mold (not shown) randomly, which forms optical sheets 460A and 460B.

Such a randomly changing height may make it difficult to notice any possible damages to optical sheets 460A and 460B caused by contacting other optical members.

Protecting layer 470b may improve the heat resistance properties of optical sheet 460b and uniformly diffuse the light incident from light guide plate 240 or optical plate 340 arranged there under.

Protecting layer 470b comprises a second resin 472b and a plurality of beads 474b distributed in second resin 472b. The detailed description of second resin 472b and beads 474b has been given above, and therefore, will not be repeated.

FIG 14 is a perspective view illustrating an optical sheet 560A according to a seventh exemplary embodiment of the present invention.

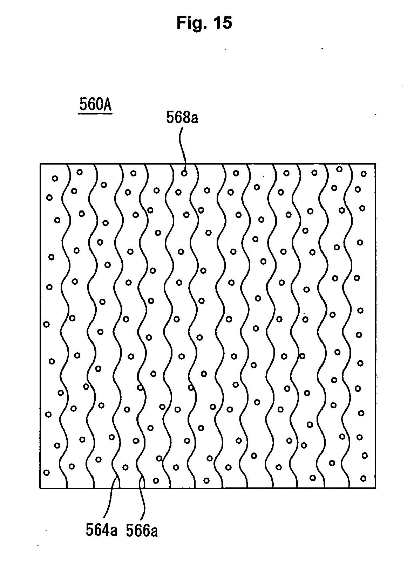

FIG 15 is a side view of the optical sheet 560A shown in FIG 14.

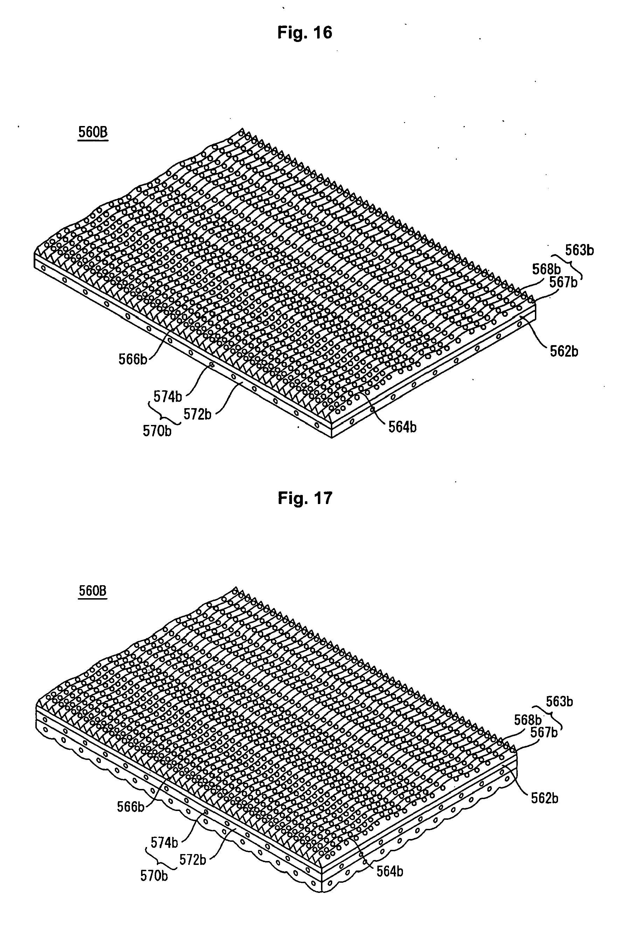

F1G. 16 is a perspective view illustrating an optical sheet 560B according to an eighth exemplary embodiment of this document, and FIG. 17 is a perspective view illustrating an optical sheet 560B according to a ninth exemplary embodiment of this document.

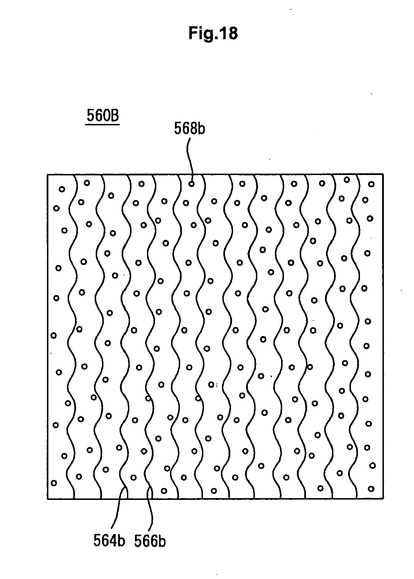

FIG 18 is a side view of the optical sheet 560B shown in FIG. 16.

Referring to FIG 14, optical sheet 560A comprises a base film 562a and a prism part 563a. Referring to FIGS. 16 and 17, optical sheet 560B comprises a base film 562b and a prism part 563b.

Optical sheet 560B differs from optical sheet 560A in that optical sheet 560B further comprises a protecting layer 570b.

Prism part 563a comprises a plurality of peaks 564a and a plurality of valleys 566a. Prism part 563b comprises a plurality of peaks 564b and a plurality of valleys 566b. Peaks 564a and 564b and valleys 566a and 566b are formed on base film 562a and 562b, respectively, in a zigzag manner, as shown in FIGS. 15 and 18.

Methods of manufacturing optical sheets 560A and 560B are not particularly limited. For example, optical sheets 560A and 560B may be manufactured so that peaks 564a and 564b and valleys 566a and 566b are patterned on base films 562a and 562b in a zigzag manner by performing a surface treatment on optical sheets 560A and 560B while vibrating a mold (not shown) periodically, which forms optical sheets 560A and 560B.

This zigzag patterning may form curved surfaces on optical sheets 560a and 560b, which may caused the light passing through optical sheets 560A and 560B to be refracted. Base films 562a and 562b may be formed of a material that has good characteristics with regard to light transmittance, mechanical properties, especially antishock performance, thermal resistance, and other electric properties. Such a material may comprise, but not limited to, thermoplastics, such as polymethyl methacrylate (PMMA), polyethylen terephthalate (PET), and polycarbonate (PC).Prism part 563a comprises a first resin 567a and a diffusion particle 568a, and prism part 563b comprises a first resin 567b and a diffusion particle 568b.

First resin 567a and 567b may be formed of a resin-based material, such as acrylic resin. The acrylic resin may comprise polyacrylate and PMMA.

Diffusion particles 568a and 568b are ditributed in resin 567a and 567b to disperse the light incident across base films 562a and 562b, resepectively. Diffusion particles 568a and 568b may be formed of transparent resin or slightly opaque material. Diffusion particles 568a and 568b may comprise beads.

The size of each diffusion particle 568a and 568b may be constant or vary with the conditions of using optical sheets 560A and 560B.

Diffusion particles 568a and 568b may be contained in first resin 567a and 567b by substantially 1 part by weight to substantially 10 parts by weight. The difference in refractive index between first resin 567a and diffusion particle 568a and between first resin 567b and diffusion particle 568b may range from about 0.01 to about 0.5. The detailed descriptions are the same as those in the above exemplary embodiment, and therefore, will be not repeated.

Protecting layer 570b may improve the heat resistance properties of optical sheet 560b and uniformly diffuse the light incident from light guide plate 240 or optical plate 340 arranged thereunder.

Protecting layer 570b comprises a second resin 572b and a plurality of beads 574b distributed in second resin 572b.

Second resin 572b may be formed of transparent acrylic resin with a good thermal-resistance and mechanical characteristic. The acrylic resin may comprise polyacrylate and PMMA.

The protecting layer 570b may comprise a second resin 572b and about 10 to 50 parts by weight of beads 574b based on 100 parts by weight of the second resin.

The diameter of bead 574b may be properly chosen depending on the thickness of optical sheet 560b, for example within about 2 µm to about 10 µm.

In this exemplary embodiment, the diameter of beads 574b may be substantially constant. And, beads 574b may be uniformly distributed in second resin 572b. This helps to not only reduce the likelihood of a haze effect but also increase the brightness.

Of course, each bead 574b may have a different diameter from the others, and beads 574b may be randomly distributed in second resin 572b. This results in the increase of haze effect, which in turn may further improve the effect of preventing the occurrence of scratches that could be caused by physical contacts.

In addition, protecting layer 570b may prevent the deformation of optical sheet 560B rising from the heat generated from light source 230a and 330. That is, high thermal-resistance second resin 572b may prevent optical sheet 560b from wrinkling and permit the optical sheet 560B deformed under high temperature to return to its original appearance under the room temperature.

Moreover, protecting layer 570b may prevent optical sheet 560B from being damaged by external impacts or physical forces.

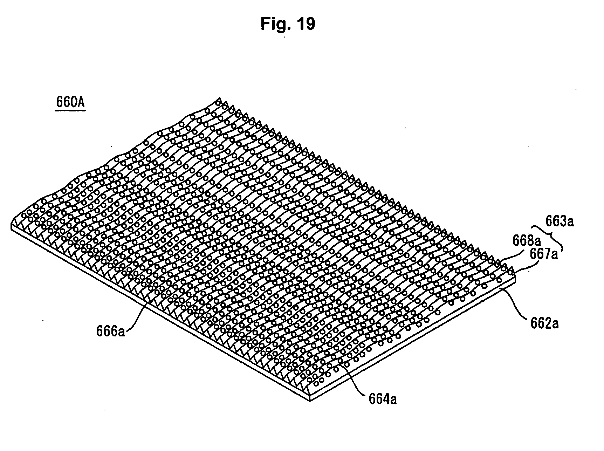

FIG 19 is a perspective view illustrating an optical sheet 660A according to a tenth exemplary embodiment of this document.

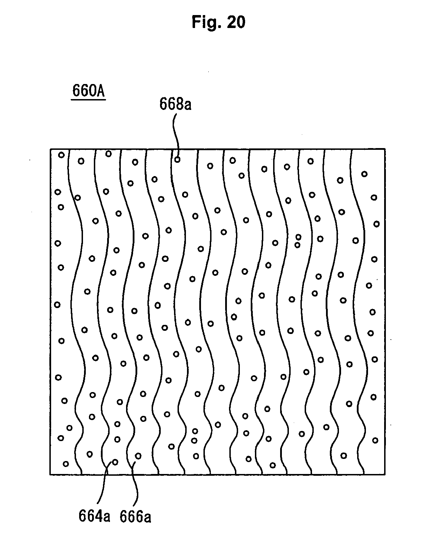

FIG 20 is a side view of the optical sheet 660A shown in FIG 19.

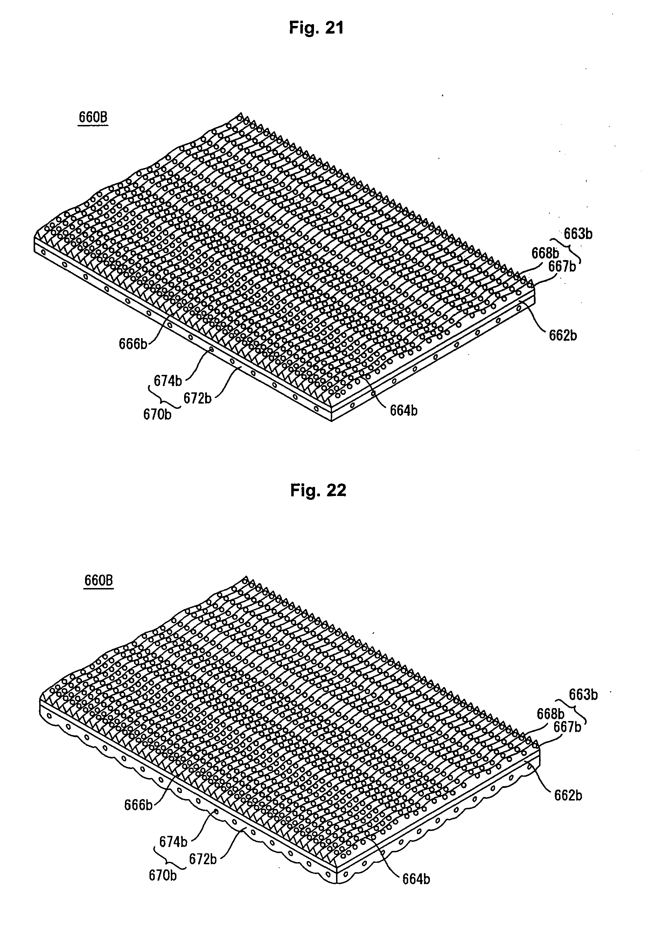

FIG 21 is a perspective view illustrating an optical sheet 660B according to an eleventh exemplary embodiment of this document, and FIG. 22 is a perspective view illustrating an optical sheet 660B according to a twelfth exemplary embodiment of this document.

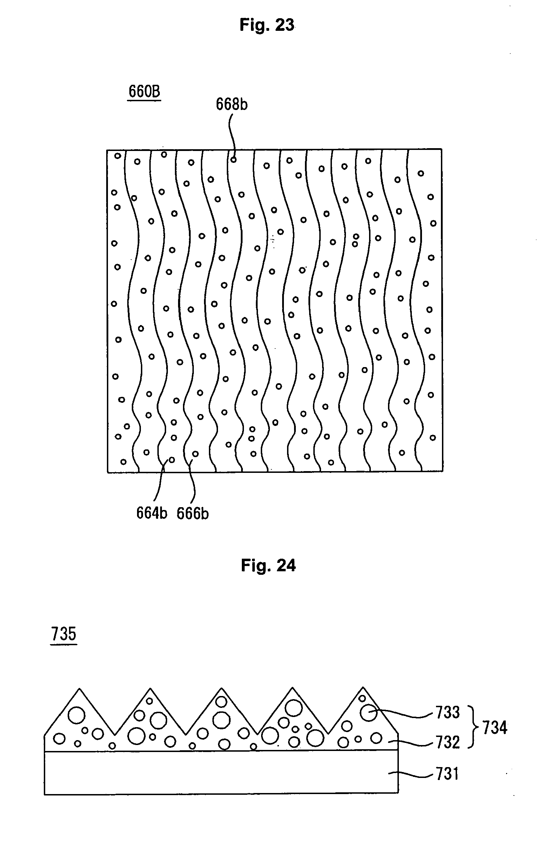

FIG. 23 is a side view of the optical sheet 660B shown in FIG 21.

Referring to FIG. 19, optical sheet 660A comprises a base film 662a and a prism part 663a. Referring to FIGS. 21 and 22, optical sheet 660B comprises a base film 662b and a prism part 663b. Optical sheet 660B differs from optical sheet 660A in that optical sheet 660B further comprises a protecting layer 670b.

Prism part 663a comprises a plurality of peaks 664a and a plurality of valleys 666a. Prism part 663b comprises a plurality of peaks 664b and a plurality of valleys 666b. Peaks 663a and 664b and valleys 666a and 666b are irregularly formed on base film 662a and 662b, respectively, in a zigzag manner, as shown in FIGS. 20 and 23.

Prism part 663a comprises a first resin 667a and a diffusion particle 668a, and prism part 663b comprises a first resin 667b and a diffusion particle 668b.

The prism part comprise the first resin and 1 to 10 parts by weight of diffusion particles 668a and 668b based on 100 parts by weight the first resin.

Methods of manufacturing optical sheets 660A and 660B are not particularly limited. For example, optical sheets 660A and 660B may be manufactured so that peaks 664a and 664b and valleys 666a and 666b are patterned on base films 662a and 662b in a zigzag manner by performing a surface treatment on optical sheets 660A and 660B while vibrating a mold (not shown) randomly, which forms optical sheets 660A and 660B.

Such randomly patterned peaks 664a and 664b and valleys 666a and 666b may make it difficult to notice any possible damages to optical sheets 660A and 660B caused by contacting other optical members, and reduce the occurrence of moiré patterns as well.

Protecting layer 670b may improve the heat resistance properties of optical sheet 660b and uniformly diffuse the light incident from light guide plate 240 or optical plate 340 arranged there under.

Protecting layer 670b comprises a second resin 672b and a plurality of beads 674b distributed in second resin 672b. The detailed description of second resin 672b and beads 674b has been given above, and therefore, will not be repeated.

FIG 24 is a cross sectional view illustrating an optical sheet 735 according to an exemplary embodiment of this document.

Referring to FIG 24, optical sheet 735 may comprise a base film 731 and a prism part 734. Prism part 734 comprises a first resin 732 and a plurality of first beads 733.

Light generated from a light source (not shown) passes through base film 731. Therefore, base film 731 may be formed of a transparent material selected from the group consisting of, but not limited to, polyethylene terephthalate, polycarbonate, polypropylene, polyethylene, polystyrene, and poly epoxy.

Prism part 734 collects the light generated from the light source (not shown) toward LCD panel 210.

Prism part 734 may have a triangular cross section. And, prism part 734 may be shaped as, but not limited to, a long prism bar extended in a longitudinal direction.

First resin 732 may be formed of acrylic resin, and first bead 733 may be formed of any one selected from the group consisting of PMMA, polystyrene, and silicon.

The prism part comprise the first resin and 1 to 10 parts by weight of the first bead 733 based on 100 parts by weight of the first resin.

**[Table 1]**

| Part by weight of first bead based on 100 parts by weight of first resin | Light refractive property |
|---|---|
| 0.5 | X |
| 1 | ○ |
| 3 | □ |
| 6 | □ |
| 9 | ○ |
| 10 | ○ |
| 11 | X |

| | |
|---|---|
| X : bad o: good □: very good | |

Here, the light refractive property can be defined as a degree to indicate the focusing and diffusing effects of light. The optical sheet according this document have a wide viewing angle while maintaining a front luminance of 80% or higher using one sheet because of this light refractive property when compared with the conventional optical sheet (with no bead). However, if the first bead has 0.5 parts by weight or less based on 100 parts by weight of the first resin, the diffusing effect might be lowered significantly, resulting in a narrow viewing angle. Further, if the first bead has 11 parts by weight or more based on 100 parts by weight of the first resin, the focusing effect might be degraded significantly.

Table 1 shows light refractive properties when the part by weight of first bead 733 relative to first resin 732 is 0.5, 1, 3, 6, 9, 10, and 11. (A larger value indicates a better light refractive property)

It can be seen in Table 1 that the light refractive property is good when the part by weight of first bead relative to first resin is between 1 and 10.

This result indicates that the light diffusing effect may be excellent when first bead 733 is contained in first resin 732 and 1 to 10 parts by weight of first bead 733 based on 100 parts by weight of the first resin 732, and therefore, the view angle of LCD panel 210 can be improved within this range.

Hereinafter, luminance curves of light output through the optical sheet formed according to this document and the conventional prism sheet are compared and described.

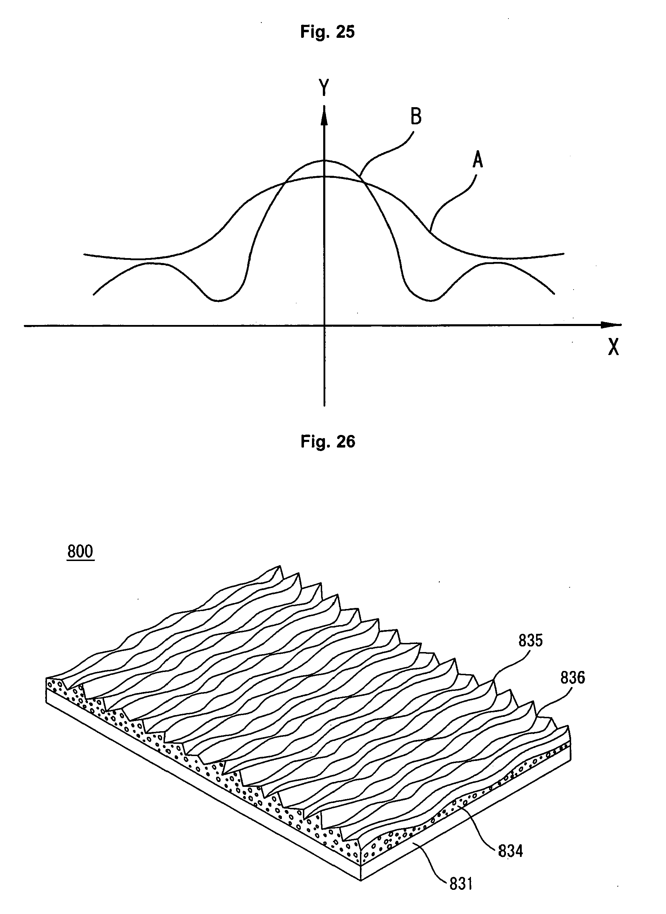

In FIG. 25, "A" indicates the luminance curve of the optical sheet of this document and "B" indicates the luminance curve of the conventional prism sheet. Further, an X axis denotes an angle with respect to a normal direction of the optical sheet of this document and the conventional prism sheet and a Y axis denotes the intensity of luminance of the optical sheet of this document and the conventional prism sheet.

From FIG 25, it can be seen that the optical sheet of this document has a low intensity of luminance within a range of a constant angle when compared with the conventional prism sheet. It can also be seen that when the conventional prism sheet is deviated from a constant angle, luminance abruptly decreases, but the luminance is smoothly decreased in the optical sheet of this document. Accordingly, the optical sheet of this document is advantageous in that it can provide a wide valid viewing angle while maintaining the uniformity of luminance.

Each first bead 733 may have a different diameter from the others.

And, first beads 733 may be randomly distributed in first resin 732.

First beads 733 may be embedded in first resin 732 not to be exposed from prism part 734.

In another exemplary embodiment, first bead 733 may have a difference in refractive index with first resin 732, ranging from about 0.01 to about 0.5.

**[Table 2]**

| Difference in refractive index between first bead and first resin | Light diffusion property |
|---|---|
| 0.005 | X |
| 0.01 | □ |
| 0.03 | □ |
| 0.1 | O |
| 0.3 | O |
| 0.5 | O |
| 0.6 | X |

| | |
|---|---|
| X : bad o: good □: very good | |

Table 2 shows light diffusion properties when the difference in refractive index between first bead 733 and first resin 732 is 0.005, 0.01, 0.03, 0.1, 0.3, 0.5, and 0.6. (A larger value indicates a better light diffusion property)

It can be seen in Table 2 that the light diffusion property is good when the difference in refractive index between first bead 733 and first resin 732 is between 0.01 and 0.5

This result indicates that the light diffusing effect may be excellent when first bead 733 has a difference in refractive index with first resin 732 in the range of about 0.01 to about 0.5, and therefore, the view angle of LCD panel 210 can be improved within this range.

Accordingly, difference in refractive index between first bead 733 and first resin 732 of more than 0.01 may greatly increase the light diffusion property of the optical sheet, and difference of less than 0.5 may prevent the decrease in the amount of light directed toward LCD panel 210.

As a consequence, in an optical sheet comprising first bead 733 and first resin 732, having there between a difference in refractive index ranging from about 0.01 to about 0.5, a light ray that incident from light guide plate 240 may be diffused at a constant angle by the difference in refractive index while passing through first resin 732, first bead 733, and first resin 732 again. In short, the light ray diffused while passing through first bead 733 is further diffused while passing through first resin 732, and therefore, the haze of light ray can be improved, which in turn the view angle of LCD panel 210 can be improved.

Hereinafter, an operation of a backlight unit with the optical sheet as described above will be described.

Light rays generated from a light source are directed toward an optical sheet. Some of the light rays strikes a first bead contained in a prism part, which in turn changes its light path, and the others propagate across the light emitting surface of the prism part toward an LCD panel.

The light rays whose light path has been changed by the first bead collide with another first bead and accordingly their light path is changed again. Some of the light rays whose light path has been changed twice propagate across the light emitting surface of the prism part toward the LCD panel and the others collide with still another first bead to change their light path once more.

The light ray that has finally passed across the light emitting surface of the prism part is evenly incident on the LCD panel.

As such, light rays incident on the optical sheet repeat reflection, change in light path, and diffusion several times by a plurality of beads before entering the LCD panel, and therefore, the light rays can concentrate on the LCD panel. As a consequence, the optical sheet may improve the brightness of an LCD device in which the optical sheet is to be comprised. And, the optical sheet can function as a diffusion plate, too.

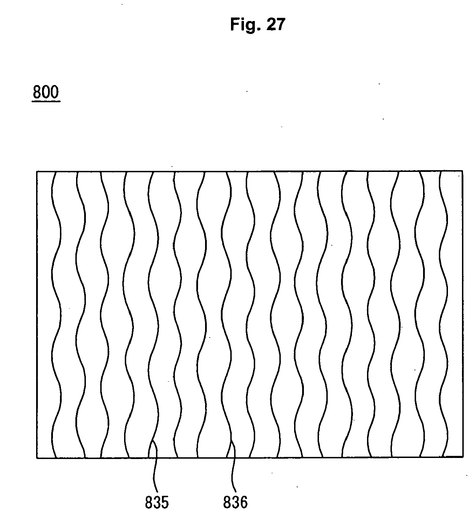

FIG 26 and FIG. 27 are a perspective view and a plan view illustrating an optical sheet 800 according to another exemplary embodiment of the present invention, respectively.

Referring to FIGS. 26 and 27, optical sheet 800 may comprise a prism part 834 which comprises a first resin and a plurality of first beads as in the above exemplary embodiments of the invention. Therefore, the detailed descriptions of the first beads and the first resin will not be repeated.

Prism parts 834, each having a peak 835 and a valley 836, are arranged in a row on a base film 831. Peak 835 and valley 836 are meanderingly extended in a direction. Prism part 834 may have a triangular cross section. The pitch between two adjacent peaks 835 may range from about 20 µm to about 300 µm.

Peak 835 may be randomly formed on base film 831 in an irregular zigzag manner. The average distance between a peak 835 and its neighboring peak 835 may range from about 1 µm to about 20 µm.

Valley 835 may also be randomly formed on base film 831 in an irregular zigzag manner. The average distance between a valley 836 and its neighboring valley 836 may range from about 1 µm to about 20 µm.

The height between a bottom surface of prism part 834 and a peak 835 may vary periodically. For example, the difference in height between two peaks 835 may range from about 1 µm to about 20 µm.

In summary, the distance between two adjacent peaks 835 may vary randomly, and the height of peak 835 may vary periodically. This may prevent any damage to optical sheet 800 rising when oppressed by other sheets to be placed on optical sheet 800 from being easily noticed from the exterior, and prevent deteriorations of image quality in the LCD device.

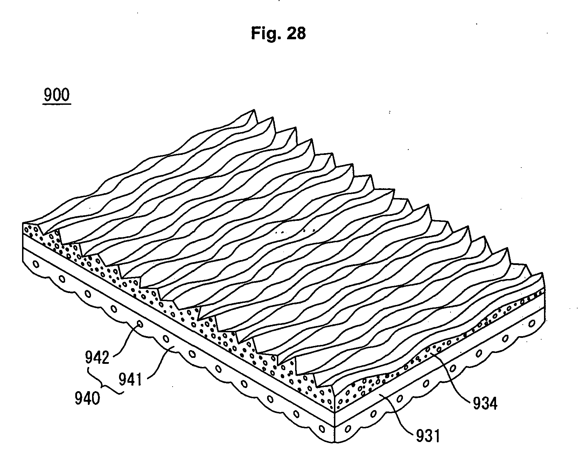

FIG. 28 is a perspective view illustrating an optical sheet 900 according to still another exemplary embodiment of the present invention.

Referring to FIG. 28, optical sheet 900 may comprise a base film 931, a prism part 934 which comprises a first resin and a plurality of first beads, and a protecting layer 940 formed under base film 931. Protecting layer 940 comprises a second resin 941 and a plurality of second beads 942 distributed in second resin 941. Prism part 934 is the same as that in the above exemplary embodiments, and therefore, the detailed descriptions will not be repeated.

Protecting layer 940 may improve the thermal resistance properties of optical sheet 900.

Second resin 941 may be formed of transparent acrylic resin with a good thermal-resistance and mechanical characteristic. The acrylic resin may comprise polyacrylate and PMMA.

The protecting layer 940 may comprise a second resin 941 and about 10 to 50 parts by weight of second bead 942 based on 100 parts by weight of the seond resin 941.

The diameter of second bead 942 may be properly chosen depending on the thickness of base film 931, for example within about 2 µm to about 10 µm.

In this exemplary embodiment, the diameter of second bead 942 may be substantially constant. And, second beads 942 may be uniformly distributed in second resin 941. On the contrary, each second bead 942 may have a different size from the others' and second beads 942 may be randomly distributed in second resin 941.

Second bead 942 may be formed of the same or different material as/form that of the first bead.

Protecting layer 940 may prevent the deformation of optical sheet 900 by heat generated from a light source. That is, high thermal-resistance second resin 941 may prevent optical sheet 900 from wrinkling and permit optical sheet 900 deformed under high temperature to return to its original appearance under the room temperature.

Moreover, protecting layer 940 may prevent optical sheet 900 from being damaged by external impacts or physical forces.

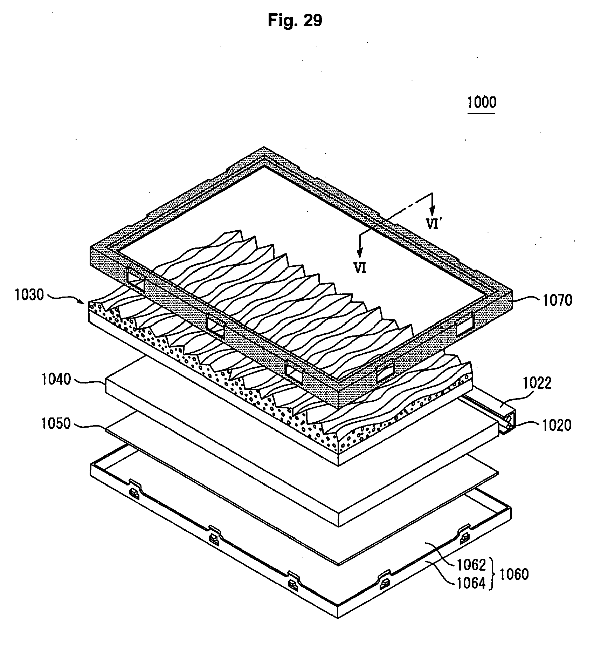

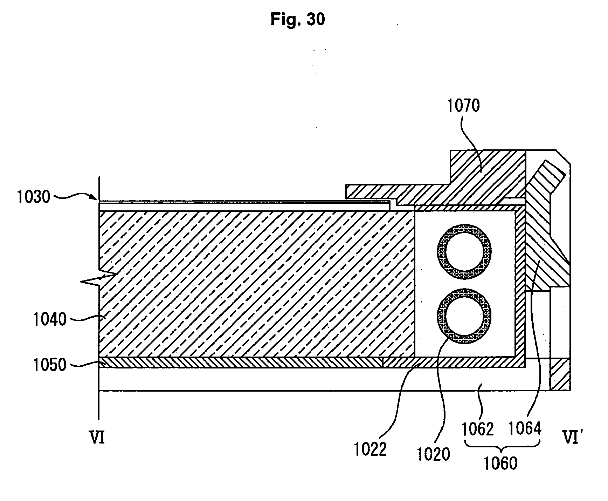

FIG 29 and FIG. 30 are a perspective view and a partial cross sectional view illustrating a backlight unit 1000 according to an exemplary embodiment of the present invention, respectively.

In FIG. 29, an edge-light type backlight unit is shown. An optical sheet comprised in backlight unit 1000 is the same as those in the above exemplary embodiments, and therefore, the detailed descriptions will be omitted.

Referring to FIGS. 29 and 30, backlight unit 1000 is provided in an LCD device (not shown) to supply a light to an LCD panel (not shown). Backlight unit 1000 may comprise a light source 1020, an optical sheet 1030, a light guide plate 1040, a reflecting plate 1050, a bottom cover 1060, and a mold frame 1070.

Light source 1020 receives external electricity and generates light.

Light source 1020 may be provided singularly or in plurality near either long edge or both long edges of light guide plate 1040. Some of the light emitted from light source 1020 may be directly incident on light guide plate 1040, or the others are first reflected by a light source housing 1022 wrapping around light source 1020 about three quarters the entire outer circumferential surface of light source 1020 and then directed toward light guide plate 1040.

Light source 1020 may comprise, but not limited to, a cold cathode fluorescent lamp (CCFL), a hot cathode fluorescent lamp (HCFL), an external electrode fluorescent lamp (EEFL), and a light emitting diode (LED).

Optical sheet 1030 may be arranged over light guide plate 1040 to collect the light emitted from light source 1020 toward an LCD panel (not shown).

As described above, optical sheet 1030 may a base film and a prism part arranged on the base film. The prism part comprises a first resin and a plurality of first beads. The first bead may have a part of weight ranging from about 1 to about 10 relative to the first resin, and a difference in refractive index with the first resin, ranging from about 0.01 to about 0.5.

Accordingly, optical sheet 1030 may improve the brightness of light even without additional optical sheets.

As a consequence, the quality of backlight unit 1000 may be improved.

Light guide plate 1040 may be arranged to face light source 1020. Light guide plate 1040 guides the light generated from light source 1020 upward, i.e. toward an LCD panel (not shown).

Reflecting plate 1050 may be arranged under light guide plate 1040 to reflect the light directed toward reflecting plate 1050 back toward the LCD panel (not shown).

Bottom cover 1060 comprises a bottom portion 1062 and a side portion 1064 extended from bottom portion 1062 to form a receiving space in which light source 1020, optical sheet 1030, light guide plate 1040, and reflecting plate 1050 may be accommodated.

Mold frame 1070 comprising rectangular rims may be combined with bottom cover 1060.

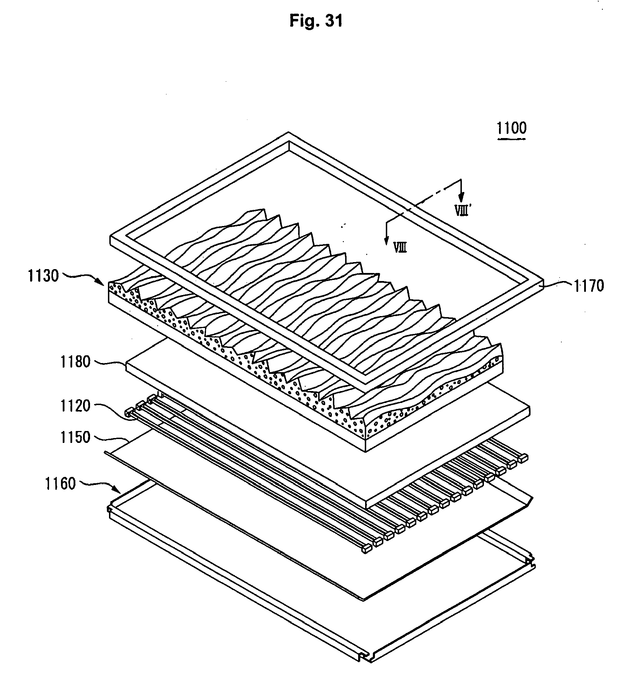

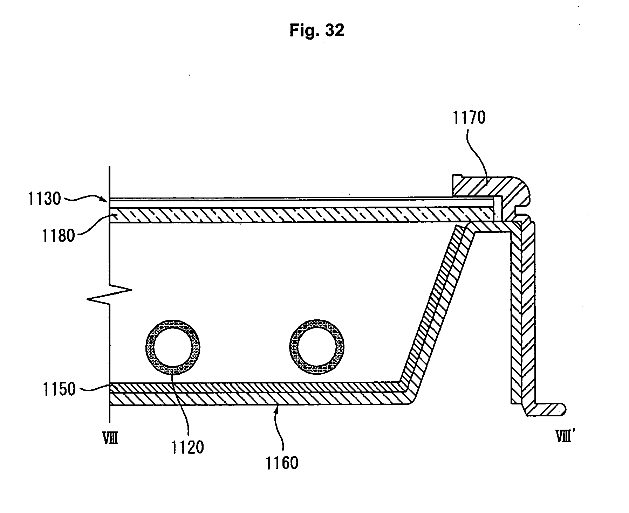

FIG. 31 and FIG 32 are a perspective view and a partial cross sectional view illustrating a backlight unit 1100 according to another exemplary embodiment of the present invention, respectively.

Although a direct-light type backlight unit is shown in FIGS. 31 and 32, the present invention is not limited thereto. The backlight unit shown in FIGS. 31 and 32 is the same as that shown in FIGS. 29 and 30, except for the difference in arrangement of its light source and the variation in components corresponding to the difference.

Referring to FIGS. 31 and 32, backlight unit 1100 is provided in an LCD device (not shown) to supply a light to an LCD panel (not shown). Backlight unit 1100 comprises a light source 1120, an optical sheet 1130, a reflecting plate 1150, a bottom cover 1160, a mold frame 1170, and a diffusion plate 1180.

Light source 1120 may be provided singularly or in plurality under diffusion plate 1180. Accordingly, the light generated from light source 1120 may be directly directed toward diffusion plate 1180.

Optical sheet 1130 may be arranged over diffusion plate 1180. Optical sheet 1130 may collect the light generated from light source 1120 toward an LCD panel (not shown).

As described above, optical sheet 1130 may a base film and a prism part arranged on the base film. The prism part comprises a first resin and a plurality of first beads. The first bead may have a part of weight ranging from about 1 to about 10 relative to the first resin, and a difference in refractive index with the first resin, ranging from about 0.01 to about 0.5.

Accordingly, optical sheet 1130 may improve the brightness of light even without additional optical sheets.

As a consequence, the quality of backlight unit 1100 may be improved.

Diffusion plate 1180 may be arranged between light source 1120 and optical sheet 1130 to diffuse the light generated from light source 1120 upward, i.e. toward optical sheet 1130. Diffusion plate 1120 may function to prevent light source 1120 from being seen through backlight unit 1100 from the external and further diffuse the light generated from light source 1120.

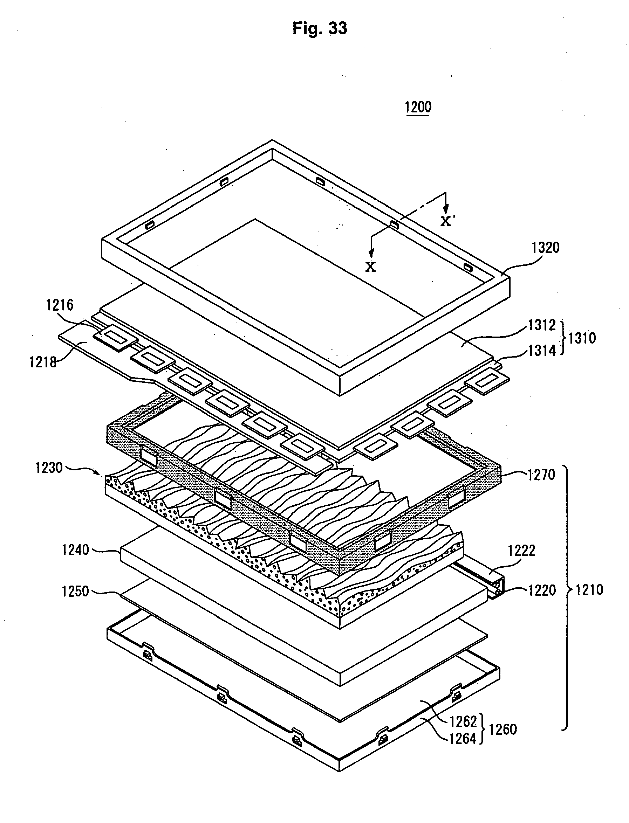

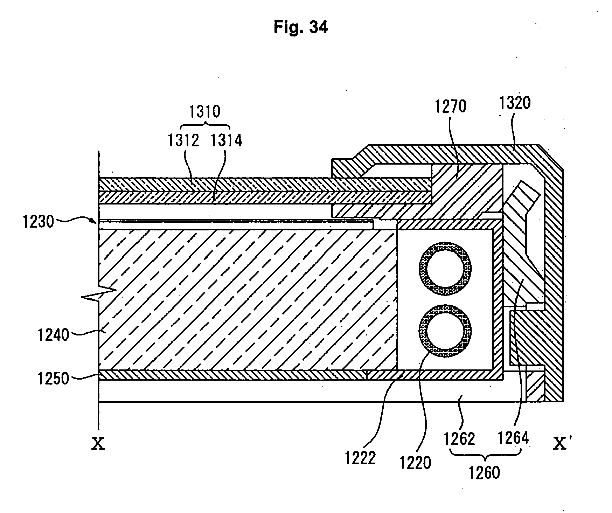

FIG 33 and FIG 34 are a perspective view and a partial cross sectional view illustrating an LCD device 1200 according to an exemplary embodiment of the present invention, respectively. Although the same backlight unit as that shown in FIGS. 29 and 30 is shown in FIGS. 33 and 34, the present invention is not limited thereto. For example, the same backlight unit as that shown in FIGS. 31 and 32 may be employed for the backlight unit shown in FIGS. 33 and 34. Accordingly, the detailed descriptions of the backlight unit will be omitted, and its features alone will be described hereafter.

Referring to FIGS. 33 and 34, LCD device 1200 may comprise a backlight unit 1210 and an LCD panel 1310.

Backlight unit 1210 may be arranged under LCD panel 1310 to supply a light to LCD panel 1310.

Backlight unit 1210 may comprise a light source 1220, an optical sheet 1230, a light guide plate 1240, a reflecting plate 1250, a bottom cover 1260, and a mold frame 1270.

LCD panel 1310 is seated on mold frame 1270 and firmly held between a top cover 1320 and bottom cover 1260 combined with top cover 1320.

LCD panel 1310 may display images using a light generated from light source 1220.

LCD panel 1310 may comprise a color filter substrate 1312 and a thin film transistor (TFT) substrate 1314 facing the color filter substrate 1312, with a liquid crystal layer (not shown) there between.

Color filter substrate 1312 may implement a color of an image to be displayed on LCD panel 1310.

Color filter substrate 1312 may comprise a base substrate formed of a transparent material, such as glass and plastics, and a color filter array formed of a thin film on the base substrate. The color filter array may comprise, but not limited to, a red color filter, a green color filter, and a blue color filter. An upper polarizing plate may be further provided on color filter substrate 1312.

TFT substrate 1314 is electrically connected through a driving film 1216 to a printed circuit board (PCB) 1218 on which various circuit components are mounted. TFT substrate 1314 may supply a driving voltage supplied from PCB 1218 to the liquid crystal layer (not shown) in response to a driving signal supplied from PCB 1218.

TFT substrate 1314 may comprise a base substrate formed of a transparent material such as glass and plastics, a TFT formed of a thin film on the base substrate, and a pixel electrode formed on the base substrate.

A lower polarizing plate (not shown) may be arranged under TFT substrate 1314.

As described above, the optical sheet according to the exemplary embodiments of the present invention may diffuse a light generated from a light source as well as collect the light toward an LCD panel thanks to the plurality of beads contained in the prism part of the optical sheet.

Also, the peaks and the valleys formed in a zigzag manner on the base film may prevent the optical sheet from being damaged from other sheets to be arranged on the optical sheet.

Moreover, the protecting layer formed in the lower side the optical sheet may improve the thermal-resistance and mechanical properties.

The foregoing embodiments and advantages are merely exemplary and are not to be construed as limiting the present invention. The present teaching can be readily applied to other types of apparatuses. The description of the foregoing embodiments is intended to be illustrative, and not to limit the scope of the claims. Many alternatives, modifications, and variations will be apparent to those skilled in the art. In the claims, means-plus-function clauses are intended to cover the structures described herein as performing the recited function and not only structural equivalents but also equivalent structures. Moreover, unless the term "means" is explicitly recited in a limitation of the claims, such limitation is not intended to be interpreted under 35 USC 112(6).

## Claims

1. An optical sheet comprising:
a base film; and
a prism part disposed on one surface of the base film, and comprising a plurality of peaks and a plurality of valleys ;
wherein the prism part comprises a plurality of diffusion particles,
and the prism part is arranged along a longitudinal direction and a height of each peak varies as the peak goes along the longitudinal direction.

2. The optical sheet of claim 1, further comprising:
a protecting layer disposed on the other surface of the base film, the protecting layer comprises a second resin and a plurality of beads.

3. The optical sheet of claim 2,
wherein a diameter of bead is substantially 2 µm to 10 µm.

4. The optical sheet of claim 1,
wherein a height of each peak varies randomly or periodically.

5. The optical sheet of claim 1,
wherein the prism part comprises a first resin,
and about 1 to 10 parts by weight of the diffusion particles based on 100 parts by weight of the first resin.

6. The optical sheet of claim 1,
wherein the prism part comprises a first resin,
a difference between a refractive index of the diffusion particle and a refractive index of the first resin lies substantially in a range between 0.01 and 0.5.

7. The optical sheet of claim 1,
the peaks and valleys are arranged in a zigzag manner along a longitudinal direction on the prism part.

8. An optical sheet comprising:
a base film; and
a prism part disposed on one surface of the base film, and comprising plurality of peaks and a plurality of valleys,
wherein the prism part comprises a plurality of diffusion particles,
and the prism part is arranged along a longitudinal direction and the peaks and valleys are arranged in a zigzag manner.

9. The optical sheet of claim 8, further comprising:
a protecting layer disposed on the other surface of the base film, the protecting layer comprises a second resin and a plurality of beads.

10. The optical sheet of claim 9,
wherein a diameter of bead is substantially 2 µm to 10 µm.

11. The optical sheet of claim 8,
wherein the peaks and the valleys vary randomly or periodically in a zigzag manner.

12. The optical sheet of claim 8,
wherein the prism part comprises a first resin,
and about 1 to 10 parts by weight of the diffusion particles based on 100 parts by weight of the resin.

13. The optical sheet of claim 8,
wherein the prism part comprises a first resin,
a difference between a refractive index of the diffusion particles and a refractive index of the resin lies substantially in a range between 0.01 and 0.5.

14. An optical sheet comprising:
a base film; and
a prism part disposed on one surface of the base film, and comprising a first resin and a plurality of diffusion particles,
a difference between a refractive index of the diffusion particle and a refractive index of the first resin lies substantially in a range between 0.01 and 0.5.

15. The optical sheet of claim 14,
wherein the diffusion particles are beads

16. The optical sheet of claim 14,
wherein the prism part comprises a first resin, and about 1 to 10 parts by weight of the diffusion particles based on 100 parts by weight of the first resin.

17. The optical sheet of claim 14,
wherein the diffusion particles are made of at least one selected from the group consisting of polymethylmethacrylate (PMMA), polystyrene, and silicon.

18. The optical sheet of claim 14,
wherein the prism part comprises a plurality of peaks and a plurality of valleys,
and a height of each peak varies randomly along a longitudinal direction on the prism part.

19. The optical sheet of claim 14, further comprising:
a protecting layer disposed on the other surface of the base film, the protecting layer comprises a second resin and a plurality of beads.

20. The optical sheet of claim 19,
wherein the prism part comprises a second resin, and about 10 to 50 parts by weight of the beads based on 100 parts by weight of the second resin.

21. A liquid crystal display device comprising:
a light source;
an optical sheet disposed on the light source; and
a liquid crystal display panel disposed on the optical sheet,
wherein the optical sheet comprises,
a base film; and
a prism part disposed on one surface of the base film, and comprising a resin and a plurality of diffusion particles,
a difference between a refractive index of the diffusion particles and a refractive index of the first resin lies substantially in a range between 0.01 and 0.5.
